Europäisches Patentamt

European Patent Office

Office européen des brevets

(11) Publication number: **0 186 077**
**B1**

# EUROPEAN PATENT SPECIFICATION

(45) Date of publication of patent specification: **31.10.90**

(51) Int. Cl.⁵: **C 03 C 13/00**

(21) Application number: **85115960.8**

(22) Date of filing: **13.12.85**

(54) Low boron glass fibers with low index of refraction.

(30) Priority: **19.12.84 US 683741**

(43) Date of publication of application:
**02.07.86 Bulletin 86/27**

(45) Publication of the grant of the patent:
**31.10.90 Bulletin 90/44**

(84) Designated Contracting States:
**BE CH DE FR GB IT LI NL**

(56) References cited:
**US-A-3 923 708**

**CHEMICAL ABSTRACTS, vol. 97, no. 20, 15th November 1982, page 306, abstract no. 167804e, Columbus, Ohio, US; & JP-A-82 77 042 (ASAHI FIBER GLASS CO. LTD) 14-05-1982**

**CHEMICAL ABSTRACTS, vol. 97, no. 20, 15th November 1982, page 306, abstract no. 167803d, Columbus, Ohio, US; & JP-A-82 77 043 (ASAHI FIBER GLASS CO. LTD) 14-05-1982**

The file contains technical information submitted after the application was filed and not included in this specification

(73) Proprietor: **PPG INDUSTRIES, INC.**
**One PPG Place**
**Pittsburgh Pennsylvania 15272 (US)**

(72) Inventor: **Sproull, James Francis**
**633 Sarver Road**
**Sarver Pennsylvania 16055 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

(56) References cited:
**CHEMICAL ABSTRACTS, vol. 98, no. 18, 2nd May 1983, page 307, abstract no. 148427p, Columbus, Ohio, US; & JP-A-57 176 233 (NIPPON MUKISENI KOGYO K.K.) 29-10-1982**

**CHEMICAL ABSTRACTS, vol. 96, no. 18, 2nd May 1982, page 330, abstract no. 147811f, Columbus, Ohio, US; & JP-A-82 03 736 (ASAHI FIBER GLASS CO. LTD) 09-01-1982**

Courier Press, Leamington Spa, England.

**Description**

The present invention is directed to a nascent glass fiber composition having a reduced boron content but having a refractive index comparable to higher boron containing glass fiber compositions. US—A—3,923,708 refers to a sizing composition comprising a self-emulsifiable unsaturated polyester of the bisphenol type as film forming material, an anionic surface active agent, a triethanolamine sulfate or sulfonate as antistatic agent and gamma methacryloxypropyl trimethoxysilane as coupling agent and a lubricant. The sizing composition is useful for glass fibers.

Glass fibers in industrial use today involve around 4 or 5 major glass compositions with the bulk of the glass fibers having the "E-glass" or "621-glass" composition. E-glass is generally described in US—A—2,334,961, and typically has a glass composition in weight percent as follows: $SiO_2$, 52—56, $Al_2O_3$, 12—16%; CaO, 16—19%; MgO, 3—6%, and $B_2O_3$, 9—11%. The "621-glass" is a modification of the typical "E-glass" formulation and is usually devoid of MgO with a CaO content much higher than that of "E-glass". The "621-glass' is described in more detail in U.S. Patent No. 2,571,074 and generally has the composition in weight percent as follows: $SiO_2$, 52—56, $Al_2O_3$, 12—16, CaO, 19—25% and $B_2O_3$, 8—13%. In addition to the aforelisted components of the "E-glass" and "621-glass', minor constituents can also be present. These constituents are typically $F_2$, $Fe_2O_3$, $K_2O$, $Na_2O$, and on occasion BaO and MgO in the case of "621" glass. In general, these minor constituents are present each in an amount of less than 1% by weight in the glass.

JP—A—82/03736 describes a glass fiber composition comprising 55.1 to 56.2% $SiO_2$, 14.1 to 15.0% $Al_2O_3$, 21 to 24% CaO+MgO, 0.1 to 5% MgO, 0.4 to 0.9% $Na_2O+K_2O$, 5.8 to 7.8% $B_2O_3$, 0.2 to 1% $F_2$, 0.6% $TiO_2$, 0.6% $Fe_2O_3$. The liquidus temperature of such a composition is 1150°C.

JP—A—82/77042 describes a glass fiber composition comprising 53 to 57% $SiO_2$, 13 to 17% $Al_2O_3$, 25.3 to 27% CaO, 0.2 to 1% alkali metal oxides, 3.0 to 5.8% $B_2O_3$, 0.6 $F_2$, 2% $TiO_2$, 1% BaO, 2% MgO, 0.6 $Fe_2O_3$ and 0.5% $ZrO_2$. The lididus temperature of this compositions is 1121°C or 1115°C.

JP—A—82/77043 describes a glass fiber composition comprising 53 to 59% $SiO_2$, 10 to 17% $Al_2O_3$, 21 to 24.5% CaO+MgO, 0—4% MgO, 0.2 to 3% ZnO+BaO, 0.2 to 1% $Na_2O+K_2O$, 2 to 7% $B_2O_3$, 0.6% $Fe_2O_3$, 0.8% $F_2$ and 0.5% $ZrO_2$.

These fiber glass compositions have low cut fiber frequencies and other properties should be comparable to those of E-glass.

The "E-glass" and "621-glass" fiber compositions have found myriad applications in the continuous glass fiber field. An example of one such application is the reinforcement of polymeric materials, for example, in producing glass fiber reinforced plastic panels. In this product line the panels for exterior use are preferably unhazy, translucent, and have a bluish hue.

In producing glass fibers, the current trend is to reduce the amount of boron in the glass fiber composition and, thereby, in the process of manufacturing the glass fibers. Benefits realized from such a reduction are both environmental and economic. A problem in the reduction of boron in glass fibers used for reinforcing polymeric materials and especially the production of glass fiber reinforced plastic panels is the difficulty in obtaining unhazy, translucent panels with a bluish hue from glass fibers having a lower boron content. The refractive index of the "E-glass" and "621-glass" is around 1.557. On reducing the boron content of the glass fibers, the refractive index of the glass fibers increases to 1.625 or more. In the application of glass fiber reinforced plastic panels, the higher refractive index of the glass tends to give an undesirable bronze transmitted color to the glass fiber reinforced panels. Also, the reduction of boron content of the glass fibers must be performed with care, since the $B_2O_3$ is a fluxing agent. With the reduction of the fluxing agent, various properties of the glass fibers such as softening point, viscosity and fiberizability can be detrimentally affected.

It is an object of the present invention to provide glass fibers having a lower boron content but having a refractive index similar to higher boron containing glass fibers, where the refractive index is in the range of greater than 1.5495 to 1.5595 and to provide glass fibers having a refractive index that closely matches a majority of the polymeric materials used in fabricating glass fiber reinforced plastic panels that are translucent, and that are unhazy and that have a bluish tint.

Summary of the invention

The glass fiber composition of the present invention is consisting in weight percent of

| | |
|---|---|
| 56.5 to 55 | $SiO_2$ |
| 15.5 to 14.5 | $Al_2O_3$ |
| 20 to 23 | CaO |
| 0 to 0.3 | MgO |
| 5.8 to 5.0 | $B_2O_3$ |
| 1.5 to 1.0 | $R_2O$ wherein R is an an alkali metal |
| 0.6 to 0.4 | $F_2$ |
| 0 to 0.6 | $TiO_2$ |
| 0 to 0.3 | $Fe_2O_3$ |

having a refractive index in the range of greater than 1.5495 up to 1.5595 and a high temperature viscosity

2

EP 0 186 077 B1

log n is 2.0 to 5.0 at 1413°C (2576°F) to 992°C (1818°F).

A method of producing glass fibers having a reduced boron concentration without increasing the refractive index of the glass fibers involves producing glass fibers by attenuating glass fibers from molten streams of glass through orifices in a glass fiber producing means of a glass composition comprising $SiO_2$, $Al_2O_3$, CaO, $B_2O_3$ alkali metal oxides and $F_2$ and gathering the fibers into one or more strands characterized in that the glass composition consists in weight percent of 56.5 to 55% $SiO_2$, 15.5 to 14.5% to $Al_2O_3$, 20 to 23% CaO, 0 to 0.3% MgO, 5.8 to 5.0% $B_2O_3$, 1.5 to 1.0% $R_2O$, wherein R is an alkali metal, 0.6 to 0.4%, $F_2$, 0 to 0.6% $TiO_2$, 0 to 0.3% $Fe_2O_3$ and the fibers are formed with an increased temperature 22° to 28°C (40°F to 50°F) in the range of 1413°C (2576°F) to 1214°C (2218°F) for the log n viscosity of 2.0 to 3.0 and having a refractive index of greater than 1.5495 up to 1.5595 and treating the glass fibers with an aqueous chemical treating composition comprising one or more aqueous soluble, dispersible or emulsifiable bisphenol A type polyester film forming polymer in an amount of 95.4 weight percent of the solids, gamma-methacryloxy propyltrimethoxy silane coupling agent in an amount of 2.8 weight percent of the solids, a cationic fiber lubricant in an amount of 1.4 weight percent of the solids, an organic quaternary ammonium salt antistatic agent in an amount of 2.6 weight percent of the solids and water to result in a volume of 189.27 litres.

Detailed description of the invention and preferred embodiment

In producing glass fibers, it is important to maintain a specific temperature—viscosity relationship. The viscosity is regulated by maintaining control of the glass composition. The viscosity for drawing fibers generally is controlled to be in the range of about $10 \times 10^2$ to $100 \times 10^3$ Pa · s (100 ($10^2$) to 1,000 ($10^3$) Poise). Also the temperature of fiber forming from the glass should be maintained at least (100°F) 55.5°C higher than the liquidus temperature. The liquidus temperature is that temperature under equilibrium conditions above which the glass exists as a liquid and below which the glass is transformed to a crystalline state.

In the "E-glass" and "621 glass" compositions, a glass former in addition to silica is boron oxide, which is also a fluxing agent in the production of glass fibers, and which also assists in achieving a low refractive index. In reducing the boron content in glass fibers while continuing to maintain the right temperature viscosity characteristics, it would be necessary to add an additional fluxing agent or increase the amount of an existing fluxing agent. It is desirable to have some boron oxide present in the glass thereby reducing the need to provide a completely new source of fluxing agent. The complete removal of boron oxide from the glass adversely affects properties other than the refractive index. Other properties for "E-glass" and "621-glass" which are desired in industry are chemical durability, alkali resistance, electrical resistance, pristine strength, liquidus temperature and softening point temperature. Hence, achieving a proper refractive index for low boron-containing glass fibers having an amount of boron oxide in the range of 5 to 5.8 and with suitable properties like "E-glass" and "621 glass" is an involved undertaking. But, arriving at a suitable fluxing agent or agents, while maintaining the desired glass properties involves proper interpretation of various factors. For instance, calcium oxide (CaO) which is already present in an "E-glass" or "621-glass" composition can serve as a fluxing agent, but increasing the calcium oxide concomitantly increases the refractive index of the glass fibers.

Also, in producing the unhazy glass fiber reinforced translucent panels, it is important that the refractive index of the glass substantially match the refractive index of the polymeric resin used as the matrix in producing the panels. If the refractive indices are too far apart, the resulting glass fiber reinforced panel can be hazy. In producing the panel, the refractive index of the resin decreases upon heating, while the glass refractive index remains stable so that, when the refractive index of the heated resin matchs the refractive index of the glass, the glass fiber reinforced panel is clear. Further heating decreases the resin refractive index below that of the glass and the glass fibers would become prominent in the glass fiber reinforced panel. On cooling the glass fiber reinforced panel, when the resin refractive index is higher than the glass, the scattered light is mostly blue, but when the resin refractive index is below the glass's refractive index, the scattered light is more in the yellow range. To closely match the refractive index of the glass to that of the matrix polymer for producing glass fiber reinforced polymers and especially glass fiber reinforced translucent panels, the refractive index of the glass should be in the range of greater than 1.5495 up to 1.5595, preferably 1.553 and up to 1.557.

The glass fiber composition of the present invention provides all of the characteristics necessary for producing glass fibers that can be used in producing translucent glass fiber reinforced plastic panels.

The glass fiber composition of the present invention is produced from any batch ingredients known to those skilled in the art to achieve the glass fiber composition of Table 1. Also any calculation method can be used that is known to those skilled in the art for back calculating from targeted oxides like those in the glass fiber composition of Table 1 to a direct batch composition or a batch composition for marbles. The latter feed material is useful in an indirect melting process to produce glass fibers. The preferred composition has a liquidus temperature of 1077°C (1970°F).

3

EP 0 186 077 B1

TABLE 1

| Components | Broad weight percentage range of amounts | Preferred weight percentage amounts |
|---|---|---|
| $SiO_2$ | 55—56.5 | 55.8% |
| CaO | 20—23 | 21.0 |
| $Al_2O_3$ | 14.5—15.5 | 14.8 |
| $B_2O_3$ | 5—5.8 | 5.2 |
| $Na_2O$ | 1—1.5 | 1.4 |
| $F_2$ | 0.4—0.6 | 0.5 |
| MgO | 0—0.3 | 0.3 |
| $TiO_2$ | 0—0.6 | 0.6 |
| $Fe_2O_3$ | 0—0.3 | 0.3 |

In general, the glass fibers can be produced having the glass composition of the present invention by any method known to those skilled in the art. A nonexclusive example includes mechanical attenuation from a bushing from which molten streams of glass are pulled through the orifices in the bushing. The glass fibers when cooled sufficiently have an aqueous sizing composition applied to their surfaces to protect the fibers from interfilament abrasion, when gathered into one or more strands and collected. In another example, the glass fibers can be formed by introducing the glass into a rotary spinner through a conduit and ejecting the glass fibers through apertures as fibers. Here the fibers are further attenuated by hot gases originating from burners located in proximity to the rotating spinner. The glass fibers are sprayed with a sizing composition and disposed as a mat on a conveyor moving under the rotary spinner. In forming the glass fibers with the glass composition of the present invention, the temperature of forming is generally higher than that required for E-glass or 621-glass, to give a desired high temperature viscosity in the range of log 2.0 to 5.0, preferably 2.5 to log 3.0. The higher temperature is a function of the amount of the reduction in boric oxide in the glass fiber composition. When the boric oxide ($B_2O_3$) is around 5.2% of the glass fiber composition, the temperature is increased around (40 to 50°F) 22°C to 28°C, while corresponding temperature increases will be required for lower amounts of boric oxide in the glass fiber composition. The temperature increase of (40° to 50°F) 22 to 28°C is usually in the temperature range of (2576°F to 2218°F) 1413.3°C to 1214°C for log viscosity of 2.0 to 3.0. Also temperature increases of a lesser degree would be necessary for producing glass fibers with amounts of boric oxide above 5.2 weight percent up to 5.8 weight percent.

Any aqueous sizing composition known to those skilled in the art can be applied to the glass fibers. For example, the sizing composition of US—A—4,110,094 can be used. In producing unhazy, translucent, glass fiber reinforced panels for exterior use, it is preferred to have an aqueous glass fiber sizing composition having the aqueous treating composition having four principal nonaqueous components. One nonaqueous component is one or more aqueous soluble, dispersible or emulsifiable bisphenol A type polyester film forming polymer alone or in a blend with an epoxy-containing polymer, where the polymers are film forming polymers compatible with and soluble in the matrix polymer. Another nonaqueous component is one or more acryloxy- or methacryloxy-containing organo coupling agents. An additional nonaqueous component is one or more cationic filament lubricants, for instance, polyalkylene amines partially amidated with fatty acids at least one of which is pelargonic acid. Another nonaqueous component is one or more organic nitrogenated cationic quaternary ammonium salt antistatic agents in an effective antistatic amount. The composition is essentially free of inorganic antistatic agents and hydrogenated vegetable oil. The amount of water in the composition allows the glass fibers to be treated with the aqueous treating composition. In addition, the aqueous composition can have a strand hardening agent. The predominant amount of the nonaqueous components is comprised of the film forming polymer, while the organo coupling agent and lubricant are present in effective amounts for coupling and lubricating, respectively. The effective antistatic amount of antistat is in the range of 0.05 to 0.4 weight percent of the aqueous treating composition. A suitable preferred aqueous sizing composition is that shown in Table 2.

4

TABLE 2

| Component | Wt. in grams | Wt.% solids | Weight of aqueous treating composition |
|---|---|---|---|
| Gamma-methacryloxy-propyltrimethoxy silane | 380 | 2.8 | 0.16 |
| Acetic acid | 25 | — | 0.01 |
| Water for silane | 22720 | — | — |
| Cationic glass fiber lubricant (Emery® 6717 lubricant) | 151.5 | 1.4 | 0.08 |
| Water for lubricant | 1895 | — | — |
| Aqueous emulsion of bisphenol A type polyester polymer (Neoxil® 954 resin) | 22,720 | 95.4 | 5.5 |
| Organic quaternary ammonium antistat Neoxil® A0-5620 | 284 | 2.6 | 0.15 |
| Water to result in volume of 50 gallons | 2,500 | — | — |

The sized glass fibers are collected into one or more strands of any construction known to those skilled in the art like H-55 or K-37 strands and wound into a forming package or into a roving package, or chopped as wet chopped strands. The glass fiber strands chopped or in a package of strands are dried to reduce their moisture content. The dried glass fibers are usually dried at a temperature in the range of (230°F to 280°F) 110°C—138°C. The dried glass fibers are suitable for reinforcing polymeric materials and the continuous lengths of glass fiber strands can be chopped as dry chopped glass fibers for use in reinforcing polymeric materials. In forming glass fiber reinforced panels for exterior use, the glass fiber strands are dry chopped in the process of producing the panels.

TABLE I

| Glass components % weight | Eg. 1 | Eg. 2 | Eg. 3 | Eg. 4 | Eg. 5 | Eg. 6 | Eg. 7 |
|---|---|---|---|---|---|---|---|
| $SiO_2$ | 55.1 | 55.6 | 55.0 | 54.9 | 55.4 | 54.9 | 56.3 |
| $Al_2O_3$ | 14.7 | 14.7 | 15.3 | 14.6 | 14.7 | 15.2 | 14.9 |
| CaO | 22.2 | 21.6 | 21.6 | 22.1 | 21.6 | 21.6 | 20.3 |
| $B_2O_3$ | 5.2 | 5.2 | 5.1 | 5.1 | 5.1 | 5.1 | 5.3 |
| $Na_2O$ | 1.0 | 1.1 | 1.1 | 1.4 | 1.4 | 1.4 | 1.5 |
| $F_2$ | 0.6 | 0.6 | 0.6 | 0.6 | 0.6 | 0.6 | 0.5 |
| Properties of glass refractive index (nD) | 1.5595 | 1.5565 | 1.558 | 1.558 | 1.557 | 1.558 | 1.5527 |
| Density g/cm³ | 2.624 | 2.616 | 2.618 | 2.623 | 2.616 | 2.618 | 2.610 |

TABLE I (cont.)

| Viscosity log (°F) °C | Eg. 1 | Eg. 2 | Eg. 3 | | Eg. 5 | | |
|---|---|---|---|---|---|---|---|
| 2.0 | (2563) 1406 | (2562) 1406 | (2561) 1406 | — | (2576) 1413 | — | — |
| 2.5 | (2367) 1297 | (2361) 1294 | (2360) 1293 | — | (2376) 1302 | — | — |
| 3.0 | (2212) 1211 | (2203) 1206 | (2203) 1206 | — | (2218) 1214 | — | — |
| 4.0 | (1984) 1084 | (1972) 1078 | (1974) 1079 | — | (1984) 1084 | — | — |
| 5.0 | (1825) 996 | (1811) 988 | (1814) 990 | — | (1818) 992 | — | — |
| 7.65 | (1566) 852 | (1552) 844 | (1559) 848 | — | — | — | — |

TABLE II

| Batch composition sample | Sand | Clay | Limestone | Boric acid | Flurospar | Salt cake | Soda ash |
|---|---|---|---|---|---|---|---|
| Example 1 (kg) | 1131 | 1107 | 1010 | 301 | 63.4 | 13.8 | 55.0 |
| Example 2 (kg) | 1131 | 1107 | 1045 | 301 | 63.4 | 11.3 | 56.8 |

| Glass fiber composition | $SiO_2$ | CaO | $Al_2O_3$ | $B_2O_3$ | $Na_2O$ | $F_2$ |
|---|---|---|---|---|---|---|
| Example 1 weight percent | 56.3 | 20.3 | 14.9 | 5.3 | 1.5 | 0.5 |
| Example 2 weight percent | 56.0 | 20.8 | 14.8 | 5.2 | 1.5 | 0.5 |

| Glass fiber properties | Refractive index | Softening point °F/°C | Density g/cm$^3$ |
|---|---|---|---|
| Example 1 | 1.5530—1.5570 | 1603.9—1609.5 / 873.3  876.4 | 2.6018—2.5957 |
| Example 2 | 1.5530—1.5550 | 1609—876.2 / 1611.7  877.1 | 2.5970—2.6042 |

In producing the glass fibers with the low boron content from 5.0 to 5.8 weight percent, while the glass fibers also have a refractive index in the preferred range of greater than 1.5530 up to 1.5570, the glass fibers are preferably produced from the batch composition with amounts in grams as follows:

| | |
|---|---|
| Sand | 1131 |
| Clay | 1099 |
| Limestone | 1053 |
| Boric acid | 301 |
| Fluorspar | 63.4 |
| Salt cake | 11.3 |
| Soda ash | 56.8 |

This batch composition yields glass fibers having the following preferred glass fiber composition.

| | |
|---|---|
| $SiO_2$ | 55.8% |
| CaO | 21.0 |
| $Al_2O_3$ | 14.8 |
| $B_2O_3$ | 5.2 |
| $Na_2O$ | 1.4 |
| $F_2$ | 0.5 |

6

The glass fibers preferably are formed by mechanical attenuation from small orifices in a glass fiber forming bushing in a direct melt operation, although a marble melt operation could also be used. The physical properties of the glass including temperatures corresponding to the high temperature viscosity from log 2.0 to log 5.0 along with the softening point temperature, liquidus temperature, density and refractive index (bulk) are as shown in Table 3 as compared to a 621 glass below:

TABLE 3

| | Log viscosity (°F) °C | Preferred embodiment | 621 |
|---|---|---|---|
| | 2.0 | (2576) 1413 | (2521) 1383 |
| | 2.5 | (2376) 1302 | (2332) 1278 |
| | 3.0 | (2218) 1214 | (2181) 1194 |
| | 4.0 | (1984) 1084 | (1956) 1069 |
| | 5.0 | (1818) 992 | (1795) 979 |
| (Softening point) | 7.65 | (1547) 842 | (1532) 833 |
| Liquidus temp. (°F) °C | | (1970) 1077 | (1925) 1052 |
| Density (g/cm$^3$) | | 2.603 | 2.61 |
| Refractive index (bulk) | | 1.556 | 1.5625 |

These glass fibers were tested for refractive index by using an optical microscope and matching index oils which yielded a refractive index of about 1.556 for the glass fibers. These glass fibers were sized with the aqueous chemical treating composition specified above in Table 2. These glass fibers were produced as direct draw roving and were dried at the aforementioned temperatures to reduce the moisture content. The dried glass fibers are subsequently chopped in a glass fiber reinforced polymeric panel line using acrylic panel polymers to yield panels that are unhazy, translucent and of a bluish hue.

The invention is further illustrated by the following nonexclusive examples.

Table I presents data of seven glass fiber compositions prepared as glass fibers in the manner of the preferred embodiment. Properties of the seven glass fibers given in Table I include: refractive index, density and viscosity.

Table II shows two batch compositions which when formed from orifices in a bushing by mechanical attenuation resulted in the two indicated glass fiber compositions which had the various indicated properties.

The pristine strength of the glass fiber formed with the glass fiber composition of the preferred embodiment was tested both before and after 16 hours in 1 Normal sulphuric acid. The pristine strength test was conducted in the usual manner known in the art, and the results of the test indicated that the glass appears to have a similar acid resistance as that of the 621 glass. So the higher alkali content of the glass fiber composition would not affect the durability of the glass fibers as compared to glass fibers of the 621 glass composition.

The electrical properties of the glass fiber composition of the preferred embodiment were compared to the electrical properties of glass fibers of 621 glass with a 5.8% $B_2O_3$ content as shown in Table III. These tests of breakdown voltage, dielectric constant, volume resistivity, and surface resistivity were performed in accordance with standard procedures known to those skilled in the art.

TABLE III
Electrical properties of preferred embodiment glass and 621 glass

|  | Glass of invention | 621 Glass (5.8% $B_2O_3$) |
|---|---|---|
| Breakdown voltage (V/25.4 µm) | 314 | 283 |
| @ 60 Hz  dielectric constant | 7.07 | 7.33 |
| dissipation factor | 0.007 | 0.006 |
| loss index | 0.049 | 0.044 |
| @ $10^6$ Hz  dielectric constant | 6.68 | 6.90 |
| dissipation factor | 0.002 | 0.002 |
| loss index | 0.013 | 0.014 |
| Volume resistivity (ohm cm) | $1.63 \times 10^{15}$ | $2.18 \times 10^{15}$ |
| Surface resistivity (ohm cm) | $1.38 \times 10^{15}$ | $7.79 \times 10^{14}$ |

From Table III, similar electrical properties are noted for the glass fibers of the present invention and for fibers of 621-glass. From Table III it is evident that the higher alkali level does not adversely affect the electrical properties and no significant differences are noticable between the glass fiber composition of the present invention and glass fiber compositions of 621 glass.

Glass fiber reinforced panels were prepared using 621-glass versus the glass fibers of the preferred embodiment. Both glass fibers were sized with the aqueous sizing composition similar to that of US—A—4,110,094 where the aqueous composition included 4,4' isopropylidene diphenol bisphenol-A-type epoxy resin, a reaction product of a partial ester of maleic anhydride and an epoxy resin containing one or more unesterified carboxyl groups and containing more than one epoxy, a propylene glycol-ethylene oxide surfactant (F-108 surfactant), hydrogenated corn oil (Pureco® oil), polyethylene glycol emulsifier (Triton® X-100), octylphenoxypolyethylene oxyethanol, polyvinyl pyrrolidone film former, ethacryloxypropyltrimethoxy silame, acetic acid, fatty acid amine salt as a glass fiber lubricant (Emery® 6717) and sufficient water to give a solids content in the range of 6.5±0.2 percent. Panels were formed with the dried chopped glass fiber strands of panel roving using polyester panel resin available from U.S. Steel Chemical Corporation. The panels were formed identically for the 621 glass and the glass of the preferred embodiment by an art recognized procedure.

From Table IV, the glass fibers of the present invention as specified in the preferred embodiment had mechanical properties at least as good as the 621 glass fibers in panels, and the higher L value in the color data is due to the greater amount of reflected light from the panel.

TABLE IV

| Samples | Flexural strength dry/wet | Strength retention% | Flexural modulus dry/wet | Glass content% | Tensile strength dry/wet | Strength retention% | Color |
|---|---|---|---|---|---|---|---|
| | $10^7$ Pa ($10^3$ psi) | | $10^9$ Pa ($10^6$ psi) | | $10^7$ Pa ($10^3$ psi) | | |
| 621 glass reinforced panels | 17.03/16.82 (24.7/24.4) | 98.8 | 6.5/6.57 (0.942/0.953) | 22.7 | 8.76/8.14 (12.7/11.8) | 92.9 | Blue, trace of pink |
| Preferred embodiment glass fiber reinforced panels | 19.86/16.27 (28.8/23.6) | 81.9 | 8.13/7.03 (1.81/1.02) | 22.3 | 9.45/9.51 (13.7/13.8) | 101[1] | Blue, slightly cloudy |

[1]Anomolous value due to increased cure of test specimen during water boil cycle.

**Claims**

1. Glass fibers consisting in weight percent of

| | |
|---|---|
| 56.5 to 55 | SiO$_2$ |
| 15.5 to 14.5 | Al$_2$O$_3$ |
| 20 to 23 | CaO |
| 0 to 0.3 | MgO |
| 5.8 to 5.0 | B$_2$O$_3$ |
| 1.5 to 1.0 | R$_2$O wherein R is an alkali metal |
| 0.6 to 0.4 | F$_2$ |
| 0 to 0.6 | TiO$_2$ |
| 0 to 0.3 | Fe$_2$O$_3$ |

having a refractive index in the range of greater than 1.5495 up to 1.5595 and a high temperature viscosity log n of 2.0 to 5.0 at 1413°C (2576°F) to 992°C (1818°F).

2. Glass fiber of Claim 1, wherein the refractive index is in the range of 1.553 to 1.557.

3. Glass fiber of Claim 1, wherein the following components are present in the following weight percentage amounts: silica 55.8, calcium oxide 21, magnesium oxide 0.3., aluminum oxide 14.8, boric oxide 5.2, sodium oxide 1.4, fluorine 0.5, titanium oxide 0.6, iron oxide 0.3.

4. Glass fiber of Claim 1, wherein the high temperature viscosity log n is 2.0 to 3 at 1413°C (2576°F) to 1214°C (2218°F).

5. Glass fiber of Claim 1, wherein the composition has a liquidus temperature of 1077°C (1970°F).

6. A process for producing glass fibers by attenuating glass fibers from molten streams of glass through orifices in a glass fiber producing means of a glass composition comprising SiO$_2$, Al$_2$O$_3$, CaO, B$_2$O$_3$ alkali metal oxides and F$_2$ and gathering the fibers into one or more strands characterized in that the glass composition consists in weight percent of 56.5 to 55% SiO$_2$, 15.5 to 14.5% to Al$_2$O$_3$, 20 to 23% CaO, 0 to 0.3% MgO, 5.8 to 5.0% B$_2$O$_3$, 1.5 to 1.0% R$_2$O, wherein R is an alkali metal, 0.6 to 0.4%, F$_2$, 0 to 0.6% TiO$_2$, 0 to 0.3% Fe$_2$O$_3$ and the fibers are formed at a temperature increased by 22° to 28°C (40°F to 50°F), compared with E-glass, in the range of 1413°C (2576°F) to 1214°C (2218°F) for the log n viscosity of 2.0 to 3.0 and having a refractive index of greater than 1.5495 up to 1.5595 and treating the glass fibers with an aqueous chemical treating composition comprising one or more aqueous soluble, dispersible or emulsifiable bisphenol A type polyester film forming polymer in an amount of 95.4 weight percent of the solids, gamma-methacryloxy propyltrimethoxy silane coupling agent in an amount of 2.8 weight percent of the solids, a cationic fiber lubricant in an amount of 1.4 weight percent of the solids, an organic quaternary ammonium salt antistatic agent in an amount of 2.6 weight percent of the solids and water to result in a volume of 189.27 litres.

7. The process of Claim 6, which includes further processing by: chopping the gathered strands, and collecting the chopped strands; or collecting the strands on a winder into a multilayered package.

8. The process of Claim 6, which includes drying the packages of glass fiber strands at an elevated temperature.

9. The process of claim 6 wherein the glass composition has a liquidus temperature of 1077°C (1970°F).

**Patentansprüche**

1. Glasfasern bestehend in Gewichtsprozent aus

| | |
|---|---|
| 56,5 bis 55 | SiO$_2$ |
| 15,5 bis 14,5 | Al$_2$O$_3$ |
| 20 bis 23 | CaO |
| 0 bis 0,3 | MgO |
| 5,8 bis 5,0 | B$_2$O$_3$ |
| 1,5 bis 1,0 | R$_2$O (wobei R ein Alkalimetall ist) |
| 0,6 bis 0,4 | F$_2$ |
| 0 bis 0,6 | TiO$_2$ |
| 0 bis 0,3 | Fe$_2$O$_3$ |

mit einem Brechungsindex im Bereich von mehr als 1,5495 bis zu 1,5595 und einem Hochtemperaturviskositäts-log n von 2,0 bis 5,0 bei 1413°C (2576°F) bis 992°C (1818°F).

2. Glasfaser nach Anspruch 1, dadurch gekennzeichnet, daß der Brechungsindex im Bereich von 1,553 bis 1,557 beträgt.

3. Glasfaser nach Anspruch 1, dadurch gekennzeichnet, daß die folgenden Bestandteile in folgenden Mengengewichtsprozent vorhanden sind: Siliziumdioxid 55,8, Calciumoxid 21, Magnesiumoxid 0,3, Aluminiumoxid 14,8, Boroxid 5,2, Natriumoxid 1,4, Fluor 0,5, Titanoxid 0,6, Eisenoxid 0,3.

10

# EP 0 186 077 B1

4. Glasfaser nach Anspruch 1, dadurch gekennzeichnet, daß der Hochtemperaturviskositäts-log n 2,0 bis 3 bei 1413°C (2576°F) bis 1214°C (2218°F) beträgt.

5. Glasfaser nach Anspruch 1, dadurch gekennzeichnet, daß die Zusammensetzung eine Liquidus-Temperatur von 1077°C (1970°F) aufweist.

6. Verfahren zum Herstellen von Glasfasern durch Ausziehen von Glasfasern aus geschmolzenen Strömen von Glas durch Öffnungen in einer Glasfaserherstellungseinrichtung aus einer $SiO_2$, $Al_2O_3$, CaO, $B_2O_3$, Alkalioxide und $F_2$ enthaltenden Glaszusammensetzung und Sammeln der Fasern in einem oder mehreren Faserbündeln, dadurch gekennzeichnet, daß die Glaszusammensetzung besteht in Gewichtsprozent aus 56,5 bis 55% $SiO_2$, 15,5 bis 14,5% $Al_2O_3$, 20 bis 23% CaO, 0 bis 0,3% MgO, 5,8 bis 5,0% $B_2O_3$, 1,5 bis 1,0% $R_2O$, wobei R ein Alkalimetall ist, 0,6 bis 0,4% $F_2$, 0 bis 0,6% $TiO_2$, 0 bis 0,3% $Fe_2O_3$ und die Fasern bei einer Temperatur gebildet werden, die von 22° bis 28°C (40°F bis 50°F) erhöht ist im Vergleich zu E-Glas, in dem Bereich von 1413°C (2576°F) bis 1214°C (2218°F) für eine log n Viskosität von 2,0 bis 3,0 und mit einem Brechungsindex von mehr als 1,5495 bis zu 1,5595 und Behandeln der Glasfasern mit einer wäßrigen chemischen Behandlungszusammensetzung enthaltend ein oder mehrere wasserlösliche(s), dispergierbare(s) oder emulgierbare(s) Bisphenol A-Typ filmbildende(s) Polyesterpolymer(e) in einer Menge von 95,4 Gew.-% der Feststoffe, γ-Methacryloxypropyltrimethoxysilankupplungsmittel in einer Menge von 2,8 Gew.-% der Feststoffe, ein kationisches Fasergleitmittel in einer Menge von 1,4 Gew.-% der Feststoffe, ein als Antistatikum wirkendes organisches quartäres Ammoniumsalz in einer Menge von 2,6 Gew.-% der Feststoffe und Wasser, um ein Volumen von 189,27 Liter zu erzeugen.

7. Verfahren nach Anspruch 6, dadurch gekennzeichnet, daß es weiterhin folgende Bearbeitungsschritte einschließt:

Schneiden der gesammelten Faserbündel und Sammeln der geschnitten Faserbündel oder Sammeln der Faserbündel auf einer Wickeleinrichtung zu mehrschichtigen Packungen.

8. Verfahren nach Anspruch 6, dadurch gekennzeichnet, daß es das Trocknen der Packungen der Glasfaserbündel bei einer erhöhten Temperatur einschließt.

9. Verfahren nach Anspruch 6, dadurch gekennzeichnet, daß die Glaszusammensetzung eine Liquidus-Temperatur von 1077°C (1970°F) aufweist.

**Revendications**

1. Fibres de verre constituées, en pourcentages en poids, de

| | |
|---|---|
| $SiO_2$ | 56,5 à 55 |
| $Al_2O_3$ | 15,5 à 14,5 |
| CaO | 20 à 23 |
| MgO | 0 à 0,3 |
| $B_2O_3$ | 5,8 à 5,0 |
| $R_2$ | 1,5 à 1,0 |
| | (où R est un métal alcalin) |
| $F_2$ | 0,6 à 0,4 |
| $TiO_2$ | 0 à 0,6 |
| $FO_2O_3$ | 0 à 0,3 |

dont l'indice de réfraction fluctue entre une valeur supérieure à 1,5495 et 1,5595 et dont la viscosité à température élevée log n varie de 2,0 à 0,50 à des températures allant de 1413°C (2576°F) à 992°C (1818°F).

2. Fibre de verre selon la revendication 1, caractérisée en ce que l'indice de réfraction se situe dans la plage de 1,553 à 1,557.

3. Fibre de verre selon la revendication 1, caractérisée en ce que les constituants suivants sont présents en les quantités exprimées par les pourcentages en poids suivants: silice 55,8%, oxyde de calcium 21%, oxyde de magnésium 0,3%, oxyde d'aluminium 14,8%, oxyde de bore 5,2%, oxyde de sodium 1,4%, fluor 0,5%, oxyde de titane 0,6%, oxyde de fer 0,3%.

4. Fibre de verre selon la revendication 1, caractérisée en ce que la viscosité à haute température log n varie de 2,0 à 3,0 à des températures allant de 1413°C (2576°F) à 1214°C (2218°F).

5. Fibre de verre selon la revendication 1, caractérisée en ce que la composition possède une température de liquidus de 1077°C (1970°F).

6. Procédé de production de fibres de verre par l'étirage de fibres de verre obtenues au départ de courants de verre fondu à travers des orifices dans un dispositif de production de fibres de verre, d'un verre constitué de $SiO_2$, $Al_2O_3$, CaO, $B_2O_3$, oxydes de métal alcalin et $F_2$, et par le rassemblement des fibres en un ou plusieurs fils de base, caractérisé en ce que le verre se compose, en pourcentage en poids, de 56,5 à 55% de $SiO_2$, de 15,5% à 14,5% de $Al_2O_3$, de 20% à 23% de CaO, de 0% à 0,3 de MgO, de 5,8 à 5,0% de $B_2O_3$, de 1,5 à 1,0% de $R_2O$, où R est un métal alcalin, de 0,6% à 0,4% de $F_2$, de 0% à 0,6% de $TiO_2$, de 0% à 0,3% de $Fe_2O_3$ et en ce qu'on façonne les fibres à une température supérieure de 22° à 28° (40°F à 50°F), comparé au verre E, dans le domaine de température de 1413°C (2576°F) à 1214°C (2218°F) pour une viscosité log n de 2,0 à 3,0 et possédant un indice de réfraction qui se situe entre une valeur supérieure à 1,5495 et 1,5595 et en ce qu'on traite les fibres de verre par une composition traitement chimique aqueuse,

11

constituée, à raison de 95,4% en poids des matières solides, d'un ou de plusieurs polymères filmogènes de polyester du type bisphénol A, dispersibles ou émulsifiables, solubles dans l'eau, à raison de 2,8% en poids des matières solides, de γ-méthacryloxypropyltriméthoxysilane comme agent de couplage, à raison de 1,4% en poids des matières solides, d'un lubrifiant cationique des fibres, à raison de 2,6% en poids des matières solides, d'un sel organique d'ammonium quaternaire comme agent antistatique et d'eau, le tout atteignant un volume de 189,27 l.

7. Procédé selon la revendication 6, caractérisé en ce que l'on applique un traitement ultérieur consistant à: couper les fils rassemblés et réunir les brins coupés; ou réunir les fils de base sur une bobine en un enroulement à couches multiples.

8. Procédé selon la revendication 6, caractérisé en ce que l'on sèche les enroulements de fils de fibres de verre à une température élevée.

9. Procédé selon la revendication 6, caractérisé en ce que la composition du verre possède une température de liquidus de 1077°C (1970°F).